# EUROPÄISCHE PATENTSCHRIFT

(11) **EP 3 617 039 B1**
(45) Veröffentlichungstag und Bekanntmachung des Hinweises auf die Patenterteilung: **22.05.2024**
(21) Anmeldenummer: 19193010.6
(22) Anmeldetag: 22.08.2019
(51) Int. Cl.: B62D 21/02, B60R 16/04

(54) **VORRICHTUNG ZUM TRAGEN MINDESTENS EINER BATTERIE FÜR EIN KRAFTFAHRZEUG**
DEVICE FOR CARRYING AT LEAST ONE BATTERY FOR A MOTOR VEHICLE
DISPOSITIF DE SUPPORT D'AU MOINS UNE BATTERIE POUR UN VÉHICULE AUTOMOBILE

(30) Priorität: 30.08.2018 DE 102018121223
(43) Veröffentlichungstag der Anmeldung: 04.03.2020
(73) Patentinhaber: MAN Truck & Bus SE, 80995 München (DE)
(72) Erfinder: Kondic, Darko, 85757 Karlsfeld (DE)
(74) Vertreter: v. Bezold & Partner Patentanwälte - PartG mbB

(56) Entgegenhaltungen:
- EP-A1- 0 591 717
- CN-A- 103 863 080
- CN-A- 104 802 860
- CN-U- 205 345 034
- DE-A1-102011 109 025
- JP-A- 2018 108 787

## Beschreibung

Die Erfindung betrifft eine Vorrichtung zum Tragen mindestens einer Batterie, vorzugsweise einer Traktionsbatterie, für ein Kraftfahrzeug, vorzugsweise ein Nutzfahrzeug.

Üblicherweise ergibt sich bauartbedingt bei Nutzfahrzeugen, wie Lastkraftwagen, unter dem Fahrzeughauptrahmen zwischen den Achsen freier Bauraum. Dieser wird üblicherweise mit Anbauteilen (Tank, Batterien, Luftdruckkessel usw.) für das Nutzfahrzeug bestückt. Bei einem batterie- oder hybridbetriebenen Nutzfahrzeug kann dieser Bauraum für Traktionsbatterien, die für den Betrieb des Fahrzeugs erforderlich sind, genutzt werden.

Beispielsweise offenbart die DE 10 2017 004 162 A1 einen Elektro- oder Hybrid-Omnibus, der eine Batteriemodulstruktur zwischen einem Vorderachssegment und einem Hinterachssegment des Omnibusses aufweist. Die Batteriemodulstruktur ist eine tragende Struktur des Omnibusses. Die Batteriemodulstruktur weist eine Vielzahl von Batteriemodulen auf und ist reversibel lösbar von der Unterseite des Omnibusses an eine Bodenstruktur des Omnibussees fixierbar.

Bei einem seitlichen Crash durch einen Personenkraftwagen (PKW), der auf ein Nutzfahrzeug auftrifft, sind die Batterien bzw. Stromspeicher durch den enormen Energieeintrag gefährdet. Es besteht die Gefahr der Beschädigung des Stromspeichers, die unter Umständen Leib und Leben gefährden kann. Um dies zu verhindern, wird üblicherweise ein steifer Käfig um die Stromspeicher gebaut, der den Energieeintrag in diese nicht zulässt. Der gesamte Energieabbau erfolgt dann im auftreffenden PKW. Dadurch besteht jedoch die Gefahr schwerer Verletzungen der Insassen des PKW.

Aus dem PKW-Bau sind bereits Techniken bekannt, die eine Beschädigung einer Traktionsbatterie eines PKW bei einem Aufprall verringern sollen. Derartige Techniken sind bspw. durch die DE 10 2010 006 514 A1, die EP 0 559 176 B1, die DE 20 2016 103 720 U1, die DE 197 38 620 C1 und die DE 10 2011 082 731 A1 offenbart.

Weitere Vorrichtungen zum Tragen von Batterien sind bspw. aus der CN 103863080 A, der JP 2018108787 A, der CN 104802860 A und der DE 10 2011 109 025 A1 bekannt.

Der Erfindung liegt die Aufgabe zu Grunde, eine alternative und/oder verbesserte Vorrichtung zum Tragen mindestens einer Batterie für ein Kraftfahrzeug, vorzugsweise ein Nutzfahrzeug, zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft eine Vorrichtung zum Tragen mindestens einer Batterie, vorzugsweise einer Traktionsbatterie, für ein Kraftfahrzeug (z. B. Elektro-Kraftfahrzeug oder Hybrid-Kraftfahrzeug), vorzugsweise ein Nutzfahrzeug (z. B. Elektro- Nutzfahrzeug oder Hybrid-Nutzfahrzeug; z. B. Lastkraftwagen oder Omnibus). Die Vorrichtung weist einen Fahrzeughauptrahmen (z. B. Leiterahmen) auf. Die Vorrichtung weist mindestens einen Batterieträger auf, der an einer Längsaußenseite (z. B. eines Hauptlängsträgers) des Fahrzeughauptrahmens (z. B. einseitig an einer Längsaußenseite und/oder Rückseite des mindestens einen Batterieträgers) befestigt ist (z. B. starr, z. B. lösbar bspw. mittels Schrauben) und in einer Vertikalrichtung nach unten über die Längsaußenseite des Fahrzeughauptrahmens übersteht, z. B. wesentlich übersteht.

Bei der hier beschriebenen Vorrichtung kann nur ein (z. B. oberer) Teilbereich des Batterieträgers für die Batterie starr an den Fahrzeughauptrahmen angebunden sein. Ein unterer Restbereich kann über den Fahrzeughauptrahmen nach unten überstehen Im Falle eines seitlichen Crashs bspw. durch einen PKW entsteht eine Art gelenkige Lagerung der Batterieträger am Fahrzeughauptrahmen. Der obere starr angebundene Bereich verschiebt sich nicht. Die Tragstruktur des Stromspeichers dreht sich um die Längsachse des Fahrzeughauptrahmens weg. Die Vorrichtung kann die Aufprallenergie aus einem Seitenaufprall definiert abbauen und dadurch die Batterien vor Beschädigung schützen. Gleichzeitig kann durch den teilweisen Abbau der Aufprallenergie durch die Vorrichtung die Verletzungsgefahr für Insassen bspw. eines aufprallenden PKW reduziert werden.

Zweckmäßig kann sich eine Längsachse des Fahrzeughauptrahmens entlang einer Längsachse des Kraftfahrzeugs erstrecken.

Zweckmäßig ist der mindestens eine Batterieträger zum Tragen und/oder Aufnehmen einer Batterie, vorzugsweise einer Traktionsbatterie, ausgebildet.

In einem Ausführungsbeispiel ist der mindestens eine Batterieträger derartig starr an der Längsaußenseite des Fahrzeughauptrahmens befestigt und/oder steht in der Vertikalrichtung nach unten über den Fahrzeughauptrahmens derartig über, dass der Batterieträger bei einem Seitenaufprall auf den Batterieträger nach unten und/oder zumindest teilweise unter den Fahrzeughauptrahmen drehbar ist (bzw. sich wegdreht).

In einer Weiterbildung wirkt die starre Befestigung (z. B. mittels mehrerer Schrauben) an der Längsaußenseite als eine Drehachse bei dem Seitenaufprall, wobei sich die Drehachse vorzugsweise entlang der Längsaußenseite erstreckt. Alternativ oder zusätzlich wirkt bei dem Seitenaufprall die starre Befestigung (z. B. mittels mehrerer Schrauben) an der Längsaußenseite als eine gelenkige Lagerung des mindestens einen Batterieträgers vorzugsweise an der Längsaußenseite.

In einem weiteren Ausführungsbeispiel weist die Vorrichtung ferner eine Stützkonstruktion auf, die vorzugsweise unterhalb des Fahrzeughauptrahmens angeordnet ist und/oder an der vorzugsweise der mindestens eine Batterieträger unterhalb der Längsaußenseite des Fahrzeughauptrahmens (z. B. lösbar) befestigt ist. Der Energieabbau bei einem Seitenaufprall eines anderen Fahrzeugs kann somit zusätzlich über eine definierte, vorzugsweise plastische, Deformation und/oder Verschiebung der Stützkonstruktion erfolgen. Die plastische Deformation kann bspw. bis zu einem gewissen Grad möglich sein. Darüber hinaus kann die Stützkonstruktion auf Anschlag gehen und es ist keine weitere Deformation möglich.

Zweckmäßig kann die Stützkonstruktion den mindestens einen Batterieträger zusätzlich an dem Fahrzeughauptrahmen, neben der Befestigung an der Längsaußenseite des Fahrzeughauptrahmens, tragen.

In einer Ausführungsform ist die Stützkonstruktion zum Ermöglichen eines Wegdrehens des mindestens einen Batterieträgers nach unten zumindest teilweise unter den Fahrzeughauptrahmen bei einem Seitenaufprall derart ausgebildet, dass sie im Vergleich zum Fahrzeughauptrahmen vorbestimmt, vorzugsweise plastisch, deformierbar, vorzugsweise nach innen faltbar, ist, vorzugsweise zum Aufprallenergieabbau.

In einer weiteren Ausführungsform ist die Stützkonstruktion zum Ermöglichen eines Wegdrehens des mindestens einen Batterieträgers nach unten zumindest teilweise unter den Fahrzeughauptrahmen bei einem Seitenaufprall derart ausgebildet, dass sie vorbestimmt verschiebbar ist.

In einer Ausführungsvariante ist die Stützkonstruktion durch eine Formgebung und/oder durch Einsatz unterschiedlicher Materialien und/oder durch Verwendung unterschiedlicher Materialstärken vorbestimmt, vorzugsweise plastisch, deformierbar und/oder vorbestimmt verschiebbar.

Es ist möglich, dass die Stützkonstruktion, z. B durch eine nach unten offene Profilgestaltung eines Querträgers der Stützkonstruktion vorbestimmt, vorzugsweise plastisch, deformierbar ist.

In einer weiteren Ausführungsvariante ist die Stützkonstruktion von unten an dem Fahrzeughauptrahmen, vorzugsweise starr, befestigt, vorzugsweise an Querträgern des Fahrzeughauptrahmens.

In einem Ausführungsbeispiel ist die Stützkonstruktion selbst zum (z. B. direkten) Tragen mindestens einer Batterie, vorzugsweise mittig, unterhalb des Fahrzeughauptrahmens ausgebildet. Vorzugsweise ist die Stützkonstruktion zum elastischen Lagern der mindestens einen, selbst getragenen Batterie ausgebildet (z. B. mittels Gummilager). Die elastische Lagerung kann eine Gefahr der Beschädigung der elastisch gelagerten Batterie bei einer Deformation und Verschiebung der Stützkonstruktion verringern.

In einem weiteren Ausführungsbeispiel weist die Stützkonstruktion mindestens einen Querträger mit einem nach unten offenem Profil, vorzugsweise ein U-Profil, auf. Alternativ oder zusätzlich weist die Stützkonstruktion zwei parallel beabstandete Hilfslängsträger auf.

Zweckmäßig kann der mindestens eine Batterieträger außen an einem Vertikalschenkel des nach unten offenen Profils des Querträgers befestigt sein.

In einer Weiterbildung ist der mindestens eine Querträger der Stützkonstruktion von unten, vorzugsweise starr, an mindestens einem Querträger des Fahrzeughauptrahmens (z. B lösbar) befestigt.

In einer Ausführungsform verbindet der mindestens eine Querträger der Stützkonstruktion die zwei parallel beabstandeten Hilfslängsträger miteinander und/oder trägt diese.

In einer weiteren Ausführungsform ist der mindestens eine Querträger der Stützkonstruktion bei der Drehung des mindestens einen Batterieträgers nach unten zumindest teilweise unter den Fahrzeughauptrahmen vorbestimmt, vorzugsweise plastisch, deformierbar, vorzugsweise nach innen faltbar.

In einer Ausführungsvariante lagern die zwei parallel beabstandeten Hilfslängsträger mindestens eine Batterie elastisch (z. B. direkt).

In einer weiteren Ausführungsvariante sind die zwei parallel beabstandeten Hilfslängsträger durch eine vorbestimmte, vorzugsweise plastische, Deformation des mindestens einen Querträgers der Stützkonstruktion bei der Drehung des mindestens einen Batterieträgers nach unten zumindest teilweise unter den Fahrzeughauptrahmen in einer Richtung des Seitenaufpralls verschiebbar.

In einem Ausführungsbeispiel ist der mindestens eine Batterieträger bezüglich einer Richtung quer zur Längsaußenseite des Fahrzeughauptrahmens vorbestimmt, vorzugsweise plastisch, deformierbar, vorzugsweise durch eine Formgebung und/oder durch Einsatz unterschiedlicher Materialien und/oder durch Verwendung unterschiedlicher Materialstärken (z. B. geringere Materialstärke und/oder Bohrungen im Bereich der vorbestimmten Deformierbarkeit usw.), sodass sich der mindestens eine Batterieträger vor dem und/oder während des Wegdrehens unter Aufprallenergieabbau bei einem Seitenaufprall vorbestimmt, vorzugsweise plastisch, deformiert.

Zweckmäßig können bspw. Außenwände des mindestens einen Batterieträgers vorbestimmt, vorzugsweise plastisch, deformierbar sein. Bspw. können die Außenwände senkrecht zu der Längsaußenseite des Fahrzeughauptrahmens ausgerichtet sein.

Erfindungsgemäß weist die Vorrichtung ferner mindestens eine Batterie, vorzugsweise eine Traktionsbatterie, auf, die in dem mindestens einen Batterieträger ausschließlich im über die Längsaußenseite des Fahrzeughauptrahmens in der Vertikalrichtung nach unten überstehenden Bereich vorzugsweise des mindestens einen Batterieträgers angeordnet ist.

In einer Ausführungsform weist der mindestens eine Batterieträger einen ersten Batterieträger auf, der an einer ersten Längsaußenseite des Fahrzeughauptrahmens befestigt ist und/oder in einer Vertikalrichtung nach unten über die erste Längsaußenseite des Fahrzeughauptrahmens übersteht. Alternativ oder zusätzlich weist der mindestens eine Batterieträger einen zweiten Batterieträger auf, der an einer zweiten Längsaußenseite des Fahrzeughauptrahmens, die der ersten Längsaußenseite entgegengesetzt ist, befestigt ist und/oder in einer Vertikalrichtung nach unten über die zweite Längsaußenseite des Fahrzeughauptrahmens übersteht.

In einer Weiterbildung weist der mindestens eine Batterieträger ferner einen dritten Batterieträger auf, der an der ersten Längsaußenseite des Fahrzeughauptrahmens befestigt ist und/oder in einer Vertikalrichtung nach unten über die erste Längsaußenseite des Fahrzeughauptrahmens übersteht, wobei der dritte Batterieträger vorzugsweise beabstandet zu dem ersten Batterieträger oder direkt gekoppelt mit dem ersten Batterieträger angeordnet ist. Alternativ oder zusätzlich weist der mindestens eine Batterieträger einen vierten Batterieträger auf, der an der zweiten Längsaußenseite des Fahrzeughauptrahmens befestigt ist und/oder in einer Vertikalrichtung nach unten über die zweite Längsaußenseite des Fahrzeughauptrahmens übersteht, wobei der vierte Batterieträger vorzugsweise beabstandet zu dem zweiten Batterieträger und/oder direkt gekoppelt mit dem zweiten Batterieträger angeordnet ist.

In einer weiteren Ausführungsform ist der Fahrzeughauptrahmen als ein Leiterrahmen gebildet, vorzugsweise mit zwei parallel beabstandeten Hauptlängsträgern, die vorzugsweise die Längsaußenseiten des Fahrzeughauptrahmens bilden oder aufweisen, und einer Mehrzahl von Querträgern, die die Hauptlängsträger miteinander verbinden.

In einer Ausführungsvariante ist der mindestens eine Batterieträger als ein Batteriekasten oder ein Batteriekäfig zur Aufnahme einer Batterie ausgebildet.

In einer weiteren Ausführungsvariante steht der mindestens eine Batterieträger um mindestens 1/3, vorzugsweise um mindestens 1/2, einer Höhe (z. B. Maximalhöhe und/oder Höhe des Batterieträgers an der an dem Fahrzeughauptrahmen anliegenden Außenseite) des mindestens einen Batterieträgers in einer Vertikalrichtung nach unten über die Längsaußenseite des Fahrzeughauptrahmens über.

In einem Ausführungsbeispiel liegt der mindestens eine Batterieträger flächig an der Längsaußenseite des Fahrzeughauptrahmens an.

Die Erfindung betrifft auch ein Kraftfahrzeug (z. B. Elektro-Kraftfahrzeug oder Hybrid-Kraftfahrzeug), vorzugsweise ein Nutzfahrzeug (z. B. Elektro-Nutzfahrzeug oder Hybrid-Nutzfahrzeug; z. B. Lastkraftwagen oder Omnibus), mit einer Vorrichtung wie hierin offenbart.

Es ist auch möglich, die Vorrichtung wie hierin offenbart für Personenkraftwagen, geländegängige Fahrzeuge usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung zum Tragen mindestens einer Batterie gemäß der vorliegenden Offenbarung.
- Figur 2: eine Ansicht der Vorrichtung zum Tragen einer Batterie gemäß der vorliegenden Offenbarung, betrachtet in einer Richtung einer Fahrzeuglängsachse oder Längsachse eines Fahrzeughauptrahmens; und
- Figur 3: eine perspektivische Ansicht eines Batterieträgers der Vorrichtung zum Tragen einer Batterie gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

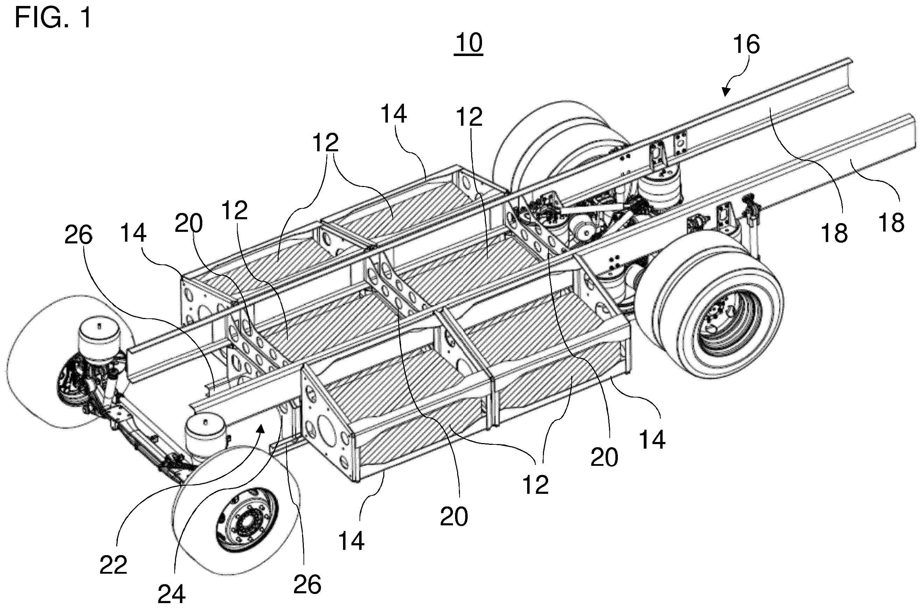

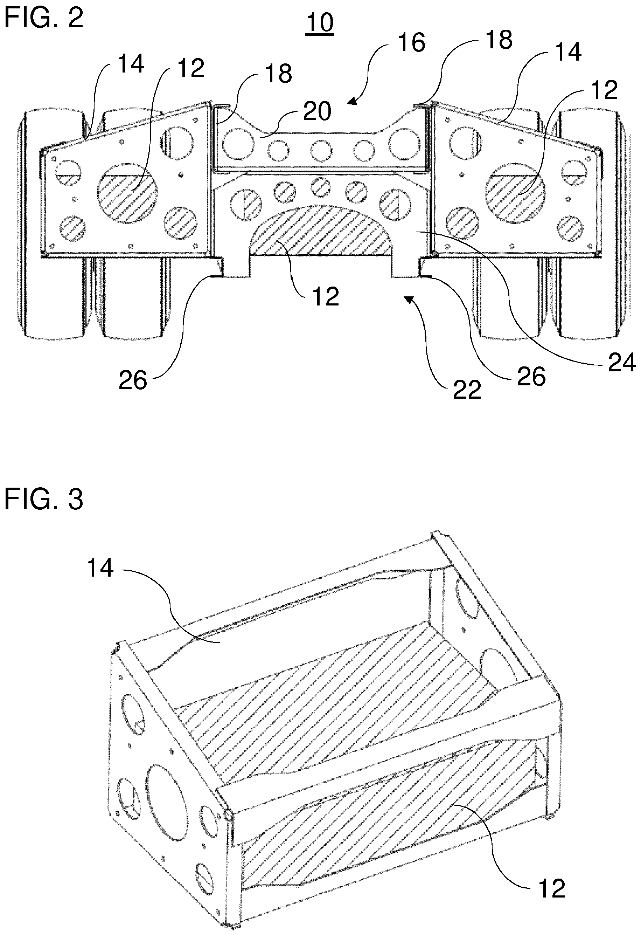

Die Figuren 1 und 2 zeigen eine Vorrichtung 10 zum Tragen mindestens einer Batterie 12 eines Kraftfahrzeugs. Die Figur 3 zeigt einen Batterieträger 14 der Vorrichtung 10. Die Batterie 12 kann vorzugsweise als eine Traktionsbatterie zum elektrischen Antreiben des Kraftfahrzeugs ausgebildet sein. Das Kraftfahrzeug ist vorzugsweise als ein Nutzfahrzeug, z. B ein Lastkraftwagen oder ein Omnibus, ausgeführt. Zweckmäßig ist das Kraftfahrzeug ein Elektro-Kraftfahrzeug, das einzig mit elektrischer Energie angetrieben ist, oder ein Hybrid-Kraftfahrzeug, das u.a. mit elektrischer Energie antreibbar ist.

In der gezeigten Ausführung ist die Vorrichtung 10 bspw. zum Tragen von sechs Batterien ausgebildet, jeweils zwei an den Längsaußenseiten und zwei mittig. In anderen Ausführungsformen können mehr oder weniger Batterien von der Vorrichtung 10 getragen sein.

Die Vorrichtung 10 weist einen Fahrzeughauptrahmen 16 und mehrere der Batterieträger 14 auf. In der dargestellten Ausführung weist die Vorrichtung 10 beispielsweise vier Batterieträger 14 auf. In anderen Ausführungsformen können mehr oder weniger Batterieträger 14 umfasst sein.

Der Fahrzeughauptrahmen 16 weist zwei parallele Hauptlängsträger 18 und mehrere Querträger 20 auf. Die Hauptlängsträger 18 sind beabstandet zueinander angeordnet. Die Hauptlängsträger 18 erstrecken sich entlang einer Längsrichtung des Kraftfahrzeugs. Beispielsweise können die Hauptlängsträger 18 als C-Profile ausgebildet sein, die vorzugsweise einander zugewandt sind, wie dargestellt ist. Die Querträger 20 verbinden die beiden Hauptlängsträger 18 miteinander. Die Hauptlängsträger 18 und die Querträger 20 bilden einen Leiterrahmen.

In der gezeigten Ausführungsform sind ein erster Batterieträger 14 und ein zweiter Batterieträger 14 an entgegengesetzten Längsaußenseite der Hauptlängsträger 18 angeordnet. Der erste Batterieträger 14 und der zweiter Batterieträger 14 sind miteinander fluchtend bezüglich einer Blickrichtung, die parallel zu einer Querrichtung des Fahrzeughauptrahmens 16 ist, angeordnet. Ferner können, wie dargestellt ist, ein dritter Batterieträger 14 und ein vierter Batterieträger 14 an entgegengesetzten Längsaußenseite der Hauptlängsträger 18 angeordnet sein, z. B. fluchtend miteinander bezüglich einer Blickrichtung, die parallel zu einer Querrichtung des Fahrzeughauptrahmens 16 ist.

Die Batterieträger 14 sind jeweils zum Aufnehmen einer der Batterien 12 ausgebildet. Beispielsweise können die Batterieträger 14 als Batteriekästen oder Batteriekäfige bspw. aus miteinander verbundenen Metallblechen ausgeführt sein, wie dargestellt ist. Die Batterieträger 14 sind außen an dem Fahrzeughauptrahmen 16 angebracht. Die Batterieträger 14 sind zwischen zwei Achsen des Kraftfahrzeugs angeordnet, zum Beispiel einer Vorderachse und einer Hinterachse des Kraftfahrzeugs. Die Batterieträger 14 sind jeweils mit einer Rückseite oder einer Längsseite der Batterieträger 14 einseitig außen an dem Fahrzeughauptrahmen 16 befestigt. Die Befestigung kann beispielsweise unlösbar, zum Beispiel mittels Schweißen, oder lösbar, zum Beispiel mittels Schrauben, erfolgen.

Wie nachfolgend ausgeführt ist, ermöglicht die hierin vorgeschlagene Anordnung der Batterieträger 14, dass die Gefahr einer Beschädigung der Batterien 12 bei einem Seitenaufprall beispielsweise eines PKW deutlich verringert ist, ohne dass der gesamten Aufprallenergieabbau im auftreffenden PKW erfolgt.

Die Batterieträger 14 sind nur bereichsweise starr an Längsaußenseiten der Hauptlängsträger 18 befestigt. Zusätzlich stehen die Batterieträger 14 in einer Vertikalrichtung nach unten über die Längsaußenseiten der Hauptlängsträger 18 über. Beispielsweise stehen die Batterieträger 14 um mindestens ein 1/3 oder mindestens 1/2 einer Höhe der Batterieträger 14 nach unten über. Bei einem Seitenaufprall auf einer der Batterieträger 14 wirkt dessen starre Befestigung an der Längsaußenseite eines der Hauptlängsträger 18 als ein Drehgelenk. Die Drehachse erstreckt sich parallel zur Längsachse entlang des Hauptlängsträger 18. Der Batterieträger 14 dreht sich somit nach unten zumindest teilweise unter den Fahrzeughauptrahmen 16. Die in dem Batterieträger 14 angeordnete Batterie 12 wird dabei nicht beschädigt, da diese in dem über die Längsaußenseite des Hauptlängsträgers 18 überstehenden Bereich des Batterieträgers 14 angeordnet ist (siehe Figur 2). Bei der Drehung kann es zur teilweisen, definierten Verformung des Batterieträgers 14 kommen, wodurch Aufprallenergie abgebaut werden kann.

Die Batterieträger 14 können ferner so ausgebildet sein, dass sie sich noch vor Beginn der Drehbewegung um den jeweiligen Hauptlängsträger 18 selbst vorbestimmt deformieren, ohne die aufgenommene Batterie 12 zu beschädigen. Beispielsweise können die Batterieträger 14 eine vorbestimmte Materialschwächung (zum Beispiel geringe Materialstärke und/oder Durchgangsbohrungen - wie dargestellt ist) in einem Bereich aufweisen, der sich bei einem Seitenaufprall vorbestimmt deformieren soll, z. B. in Außenwänden der Batterieträger 14.

In der dargestellten Ausführungsform sind jeweils zwei Batterieträger 14 an jeder Längsaußenseite des Fahrzeughauptrahmens 16 befestigt. Die zwei Batterieträger 14 (erster und dritter Batterieträger 14 oder zweiter und vierter Batterieträger 14) können zueinander beabstandet (entkoppelt) angeordnet sein, sodass eine Drehung und plastische Deformation des einen Batterieträgers den anderen Batterieträger der jeweiligen Längsaußenseite nicht beschädigt. Es ist allerdings auch möglich, dass die zwei Batterieträger 14 direkt miteinander verbunden und gekoppelt sind, um beispielsweise zusätzliche Aufprallenergie bei einem Seitenaufprall auf nur einen der zwei Batterieträger 14 abzubauen.

Die Vorrichtung 10 kann eine Stützkonstruktion oder Tragstruktur 22 aufweisen. Die Stützkonstruktion 22 kann zwischen den Batterieträgern 14 und unterhalb des Fahrzeughauptrahmens 16 angeordnet sein. Die Stützkonstruktion 22 kann einen Aufprallenergieabbau bei Drehung mindestens eines der Batterieträger 14 nach unten unter den Fahrzeughauptrahmen 16 erhöhen. Die Stützkonstruktion 22 kann sich dabei zumindest teilweise vorbestimmt deformieren und/oder zumindest teilweise vorbestimmt verschieben.

Die Stützkonstruktion 22 kann mehrere Querträger 24 und zwei Hilflängsträger 26 aufweisen, wie dargestellt ist.

Die Querträger 24 der Stützkonstruktion 22 sind von unten an den Fahrzeughauptrahmen 16 befestigt, vorzugsweise jeweils an Querträgern 20 des Fahrzeughauptrahmens 16. Die

Befestigung kann beispielsweise unlösbar, zum Beispiel mittels Schweißen, oder lösbar, zum Beispiel mittels Schrauben, ausgeführt sein.

Die Querträger 24 tragen die zwei Hilfslängsträger 26 an entgegengesetzten Außenseiten der Stützkonstruktion 22. Die Hilfslängsträger 26 können beispielsweise lösbar oder unlösbar außen an den Querträgern 24 befestigt sein. Die Hilfslängsträger 26 erstrecken sich parallel beabstandet zueinander. Die Hilfslängsträger 26 erstrecken sich im Wesentlichen entlang einer gesamten Länge der Batterieträger 14 bezüglich einer Längsrichtung des Kraftfahrzeugs. Die Hilfslängsträger 26 sind unterhalb des Fahrzeughauptrahmens 16, vorzugsweise jeweils unterhalb der Hauptlängsträger 18, angeordnet, z. B. in unteren Eckbereichen der Stützkonstrution 22, wie dargestellt ist. Beispielsweise können die Hilfslängsträger 26 als C-Profile ausgeführt sein, die vorzugsweise einander zugewandt sind. Andere Ausrichtungen und Formen der Hilfslängsträger sind ebenfalls möglich.

An den Außenseiten der Querträger 24 sind die Batterieträger 14 außen befestigt, zum Beispiel unlösbar mittels Schweißen oder lösbar mittels Schrauben. Die Batterieträger 14 sind mit den über die Längsaußenseiten der Hauptlängsträger 18 überstehenden Bereichen an den Querträgern 24 befestigt. Die Batterieträger 14 können, aber müssen nicht, zusätzlich an den Hilfslängsträger 26 befestigt sein.

Wenn bei einem Seitenaufprall einer der Batterieträger 14 nach unten unterhalb des Fahrzeughauptrahmens 16 verschwenkt wird, wird einer oder werden mehrere der Querträger 24 vorbestimmt deformiert. Die Querträger 24 sind so ausgeführt, dass sie sich vorbestimmt deformieren, um eine Drehung der Batterieträger 14 nach unten unterhalb des Fahrzeugrahmens 16 ermöglichen. Die Deformation ist in dem dargestellten Ausführungsbeispiel durch die nach unten offene Profilform des als offenes U-Profil gebildeten Querträgers 24 vorbestimmt. Bei einem Seitenaufprall kann sich bspw. ein Vertikalschenkel des offenen Profils unter Aufprallenergieabbau nach innen falten. Es ist auch möglich, die Deformierbarkeit des Querträgers alternativ oder zusätzlich durch Einsatz unterschiedlicher Materialien und/oder durch Verwendung unterschiedlicher Materialstärken für den Fall des Seitenaufpralls vorzubestimmen.

Die Hilfslängsträger 26 lagern eine oder mehrere Batterien 12 unterhalb des Fahrzeughauptrahmens 16. Diese eine oder mehreren Batterien 12 sind vorzugsweise elastisch an den Hilfslängsträger 26 gelagert, z. B. über Gummilager.

Wenn bei einem Seitenaufprall einer der Batterieträger 14 nach unten unterhalb des Fahrzeughauptrahmens 16 verschwenkt wird, wird der Hilfslängsträger 26 auf der Seite des Seitenaufpralls nach innen verschoben, während sich einer oder mehrere der Querträger 24 entsprechend deformieren. Hierbei wird die durch den Hilfslängsträger 26 gelagerte Batterie 12 durch die elastische Lagerung nicht beeinträchtigt.

Der Energieabbau bei einem Seitenaufprall kann somit durch die Vorrichtung 10 stufig abgebaut werden. Zunächst wird der Batterieträger 14 selbst in einem vorbestimmten Bereich deformiert, ohne die Batterie 12 zu beschädigen. Gleichzeitig oder danach erfolgt eine Drehung des Batterieträgers 14 unter den Fahrzeughauptrahmen 16, wobei die Stützkonstruktion 22 vorbestimmt deformiert und verschoben wird. Die elastische Lagerung der durch die Stützkonstruktion 22 gelagerten Batterien 12 verhindert bei der Deformation und Verschiebung der Stützkonstruktion 22, dass die durch die Stützkonstruktion 22 gelagerten Batterien 12 beschädigt werden. Es ist sogar möglich, dass bei einem Seitenaufprall auf eine Längsaußenseite des Kraftfahrzeugs die Deformation und Verschiebung der Stützkonstruktion 22, eine Drehbewegung (und vorbestimmte Deformation) des auf der anderen Längsaußenseite befestigten Batterieträgers 14 nach oben zur Folge haben kann.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Fahrzeughauptrahmens und/oder des mindestens einen Batterieträgers des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweilige bevorzugte engere Außengrenzen des jeweiligen Bereichs.

### Bezugszeichenliste

- 10: Vorrichtung zum Tragen mindestens einer Traktionsbatterie
- 12: Batterie
- 14: Batterieträger
- 16: Fahrzeughauptrahmen
- 18: Hauptlängsträger
- 20: Querträger
- 22: Stützkonstruktion
- 24: Querträger
- 26: Hilfslängsträger

## Patentansprüche

1. Vorrichtung (10) zum Tragen mindestens einer Batterie (12), vorzugsweise einer Traktionsbatterie, für ein Kraftfahrzeug, vorzugsweise ein Nutzfahrzeug, aufweisend:
einen Fahrzeughauptrahmen (16); und
mindestens einen Batterieträger (14), der an einer Längsaußenseite des Fahrzeughauptrahmens (16) befestigt ist und in einer Vertikalrichtung nach unten über die Längsaußenseite des Fahrzeughauptrahmens (16) übersteht, **gekennzeichnet durch**
mindestens eine Batterie (12), vorzugsweise eine Traktionsbatterie, die in dem mindestens einen Batterieträger (14) ausschließlich im über die Längsaußenseite des Fahrzeughauptrahmens (16) in der Vertikalrichtung nach unten überstehenden Bereich angeordnet ist.

2. Vorrichtung (10) nach Anspruch 1, wobei:
der mindestens eine Batterieträger (14) derartig starr an der Längsaußenseite des Fahrzeughauptrahmens (16) befestigt ist und in der Vertikalrichtung nach unten über den Fahrzeughauptrahmens (16) übersteht, dass der Batterieträger (14) bei einem Seitenaufprall auf den Batterieträger (14) nach unten zumindest teilweise unter den Fahrzeughauptrahmen (16) drehbar ist.

3. Vorrichtung (10) nach Anspruch 2, wobei:
die starre Befestigung an der Längsaußenseite als eine Drehachse bei dem Seitenaufprall wirkt, wobei sich die Drehachse vorzugsweise entlang der Längsaußenseite erstreckt; und/oder
bei dem Seitenaufprall die starre Befestigung an der Längsaußenseite als eine gelenkige Lagerung des mindestens einen Batterieträgers (14) wirkt.

4. Vorrichtung (10) nach einem der vorherigen Ansprüche, ferner aufweisend:
eine Stützkonstruktion (22), die unterhalb des Fahrzeughauptrahmens (16) angeordnet ist und an der der mindestens eine Batterieträger (14) unterhalb der Längsaußenseite des Fahrzeughauptrahmens (16) befestigt ist.

5. Vorrichtung (10) nach Anspruch 4, wobei:
die Stützkonstruktion (22) zum Ermöglichen eines Wegdrehens des mindestens einen Batterieträgers (14) nach unten zumindest teilweise unter den Fahrzeughauptrahmen (16) bei einem Seitenaufprall derart ausgebildet ist, dass sie im Vergleich zum Fahrzeughauptahmen (16) vorbestimmt deformierbar, vorzugsweise nach innen faltbar, ist; und/oder
die Stützkonstruktion (22) zum Ermöglichen eines Wegdrehens des mindestens einen Batterieträgers (14) nach unten zumindest teilweise unter den Fahrzeughauptrahmen (16) bei einem Seitenaufprall derart ausgebildet ist, dass sie vorbestimmt verschiebbar ist.

6. Vorrichtung (10) nach Anspruch 4 oder Anspruch 5, wobei:
die Stützkonstruktion (22) durch eine Formgebung und/oder durch Einsatz unterschiedlicher Materialien und/oder durch Verwendung unterschiedlicher Materialstärken vorbestimmt deformierbar und/oder vorbestimmt verschiebbar ist; und/oder
die Stützkonstruktion (22) von unten an dem Fahrzeughauptrahmen (16), vorzugsweise starr, befestigt ist, vorzugsweise an Querträgern des Fahrzeughauptrahmens (16).

7. Vorrichtung (10) nach einem der Ansprüche 4 bis 6, wobei:
die Stützkonstruktion (22) selbst zum Tragen mindestens einer Batterie (12), vorzugsweise mittig, unterhalb des Fahrzeughauptrahmens (16) ausgebildet ist,
wobei vorzugsweise:
die Stützkonstruktion (22) zum elastischen Lagern der mindestens einen, selbst getragenen Batterie (12) ausgebildet ist.

8. Vorrichtung (10) nach einem der Ansprüche 4 bis 7, wobei:
die Stützkonstruktion (22) mindestens einen Querträger (24) mit einem nach unten offenem Profil, vorzugsweise ein U-Profil, aufweist; und/oder
die Stützkonstruktion (22) zwei parallel beabstandete Hilfslängsträger (26) aufweist.

9. Vorrichtung (10) nach Anspruch 8, wobei:
der mindestens eine Querträger (24) der Stützkonstruktion (22) von unten, vorzugsweise starr, an mindestens einem Querträger (20) des Fahrzeughauptrahmens (16) befestigt ist; und/oder
der mindestens eine Querträger (24) der Stützkonstruktion (22) die zwei parallel beabstandeten Hilfslängsträger (26) miteinander verbindet und/oder trägt; und/oder
der mindestens eine Querträger (24) der Stützkonstruktion (22) bei der Drehung des mindestens einen Batterieträgers (14) nach unten zumindest teilweise unter den Fahrzeughauptrahmen (16) vorbestimmt deformierbar, vorzugsweise nach innen faltbar, ist; und/oder
die zwei parallel beabstandeten Hilfslängsträger (26) mindestens eine Batterie (12) elastisch lagern; und/oder
die zwei parallel beabstandeten Hilfslängsträger (26) durch eine vorbestimmte Deformation des mindestens einen Querträgers (24) der Stützkonstruktion (22) bei der Drehung des mindestens einen Batterieträgers (14) nach unten zumindest teilweise unter den Fahrzeughauptrahmen (16) in einer Richtung des Seitenaufpralls verschiebbar sind.

10. Vorrichtung (10) nach Anspruch 5 oder einem der Ansprüche 6 bis 9, wenn abhängig vom Anspruch 5, wobei:
der mindestens eine Batterieträger (14) bezüglich einer Richtung quer zur Längsaußenseite des Fahrzeughauptrahmens (16) vorbestimmt deformierbar ist, vorzugsweise durch eine Formgebung und/oder durch Einsatz unterschiedlicher Materialien und/oder durch Verwendung unterschiedlicher Materialstärken, sodass sich der mindestens eine Batterieträger (14) vor dem und/oder während des Wegdrehens unter Aufprallenergieabbau bei einem Seitenaufprall vorbestimmt deformiert.

11. Vorrichtung (10) nach einem der vorherigen Ansprüche, wobei der mindestens eine Batterieträger (14) aufweist:
einen ersten Batterieträger (14), der an einer ersten Längsaußenseite des Fahrzeughauptrahmens (16) befestigt ist und in einer Vertikalrichtung nach unten über die erste Längsaußenseite des Fahrzeughauptrahmens (16) übersteht; und
einen zweiten Batterieträger (14), der an einer zweiten Längsaußenseite des Fahrzeughauptrahmens (16), die der ersten Längsaußenseite entgegengesetzt ist, befestigt ist und in einer Vertikalrichtung nach unten über die zweite Längsaußenseite des Fahrzeughauptrahmens (16) übersteht.

12. Vorrichtung (10) nach Anspruch 11, wobei der mindestens eine Batterieträger (14) ferner aufweist:
einen dritten Batterieträger (14), der an der ersten Längsaußenseite des Fahrzeughauptrahmens (16) befestigt ist und in einer Vertikalrichtung nach unten über die erste Längsaußenseite des Fahrzeughauptrahmens (16) übersteht, wobei der dritte Batterieträger (14) beabstandet zu dem ersten Batterieträger (14) oder direkt gekoppelt mit dem ersten Batterieträger (14) angeordnet ist; und/oder
einen vierten Batterieträger (14), der an der zweiten Längsaußenseite des Fahrzeughauptrahmens (16) befestigt ist und in einer Vertikalrichtung nach unten über die zweite Längsaußenseite des Fahrzeughauptrahmens (16) übersteht, wobei der vierte Batterieträger (14) beabstandet zu dem zweiten Batterieträger (14) und/oder direkt gekoppelt mit dem zweiten Batterieträger (14) angeordnet ist.

13. Vorrichtung (10) nach einem der vorherigen Ansprüche, wobei:
der Fahrzeughauptrahmen (16) als ein Leiterrahmen gebildet ist, vorzugsweise mit zwei parallel beabstandeten Hauptlängsträgern (18) und einer Mehrzahl von Querträgern (20), die die Hauptlängsträger (18) miteinander verbinden; und/oder
der mindestens eine Batterieträger (14) als ein Batteriekasten oder ein Batteriekäfig zur Aufnahme einer Batterie (12) ausgebildet ist; und/oder
der mindestens eine Batterieträger (14) um mindestens 1/3, vorzugsweise um mindestens 1/2, einer Höhe des mindestens einen Batterieträgers (14) in einer Vertikalrichtung nach unten über die Längsaußenseite des Fahrzeughauptrahmens (16) übersteht; und/oder
der mindestens eine Batterieträger (14) flächig an der Längsaußenseite des Fahrzeughauptrahmens (16) anliegt.

14. Kraftfahrzeug, vorzugsweise Nutzfahrzeug, mit einer Vorrichtung nach einem der vorhereigen Ansprüche.

## Claims

1. A device (10) for supporting at least one battery (12), preferably a traction battery, for a motor vehicle, preferably a utility vehicle, comprising:
a vehicle main frame (16); and
at least one battery carrier (14) which is fastened to a longitudinal outer side of the vehicle main frame (16) and projects downwards in a vertical direction beyond the longitudinal outer side of the vehicle main frame (16),
**characterised by**
at least one battery (12), preferably a traction battery, which is arranged in the at least one battery carrier (14) exclusively in the portion projecting downwards in the vertical direction beyond the longitudinal outer side of the vehicle main frame (16).

2. The device (10) according to claim 1, wherein:
the at least one battery carrier (14) is rigidly fastened to the longitudinal outer side of the vehicle main frame (16) and projects downwards in the vertical direction beyond the vehicle main frame (16) in such a way that the battery carrier (14) is at least partially rotatable downwards under the vehicle main frame (16) in the event of a side impact on the battery carrier (14).

3. The device (10) according to claim 2, wherein:
the rigid fastening on the longitudinal outer side acts as an axis of rotation during the side impact, the axis of rotation preferably extending along the longitudinal outer side; and/or
the rigid fastening on the longitudinal outer side acts as an articulated mounting of the at least one battery carrier (14) during the side impact.

4. The device (10) according to any of the previous claims, further comprising:
a support structure (22) arranged below the vehicle main frame (16), and to which the at least one battery carrier (14) is fastened below the longitudinal outer side of the vehicle main frame (16).

5. The device (10) according to claim 4, wherein:
the support structure (22) for enabling the at least one battery carrier (14) to rotate downwards at least partially under the vehicle main frame (16) in the event of a side impact is configured such that it is predeterminedly deformable, preferably inwardly foldable, in comparison to the vehicle main frame (16); and/or
the support structure (22) for enabling the at least one battery carrier (14) to be rotated downwards at least partially under the vehicle main frame (16) in the event of a side impact is configured in such a way that it can be displaced in a predetermined manner.

6. The device (10) according to claim 4 or claim 5, wherein:
the support structure (22) is predeterminedly deformable and/or predeterminedly displaceable by shaping and/or by using different materials and/or by using different material thicknesses; and/or
the support structure (22) is fastened from below to the vehicle main frame (16), preferably rigidly, preferably to cross beams of the vehicle main frame (16).

7. The device (10) according to any one of claims 4 to 6, wherein:
the support structure (22) itself is configured to support at least one battery (12), preferably centrally, below the vehicle main frame (16),
wherein preferably:
the support structure (22) is configured to elastically support the at least one self-supported battery (12).

8. The device (10) according to any one of claims 4 to 7, wherein:
the support structure (22) comprises at least one cross beam (24) with a downwardly open profile, preferably a U-profile; and/or
the support structure (22) comprises two parallel-spaced auxiliary longitudinal beams (26).

9. The device (10) according to claim 8, wherein:
the at least one cross beam (24) of the support structure (22) is fastened from below, preferably rigidly, to at least one cross beam (20) of the vehicle main frame (16); and/or
the at least one cross beam (24) of the support structure (22) connects and/or supports the two parallel-spaced auxiliary longitudinal members (26); and/or
the at least one cross beam (24) of the support structure (22) is at least partially deformable, preferably inwardly foldable, under the vehicle main frame (16) in a predetermined manner when the at least one battery carrier (14) is rotated downwards; and/or
the two parallel-spaced auxiliary longitudinal beams (26) elastically support at least one battery (12); and/or
the two parallel-spaced auxiliary longitudinal beams (26) are at least partially displaceable under the vehicle main frame (16) in a direction of side impact by a predetermined deformation of the at least one cross beam (24) of the support structure (22) during the downward rotation of the at least one battery carrier (14).

10. The device (10) according to claim 5 or one of claims 6 to 9, if dependent on claim 5, wherein:
the at least one battery carrier (14) is predeterminedly deformable with respect to a direction transverse to the longitudinal outer side of the vehicle main frame (16), preferably by shaping and/or by using different materials and/or by using different material thicknesses, so that the at least one battery carrier (14) predeterminedly deforms before and/or during the rotating away under impact energy dissipation in a side impact.

11. The device (10) according to one of the previous claims, wherein the at least one battery carrier (14) comprises:
a first battery carrier (14) fastened to a first longitudinal outer side of the vehicle main frame (16) and projecting downwards in a vertical direction beyond the first longitudinal outer side of the vehicle main frame (16); and
a second battery carrier (14) fastened to a second longitudinal outer side of the vehicle main frame (16) opposite to the first longitudinal outer side and projecting downwardly in a vertical direction beyond the second longitudinal outer side of the vehicle main frame (16).

12. The device (10) according to claim 11, wherein the at least one battery carrier (14) further comprises:
a third battery carrier (14) fastened to the first longitudinal outer side of the vehicle main frame (16) and projecting downwards in a vertical direction beyond the first longitudinal outer side of the vehicle main frame (16), wherein the third battery carrier (14) is arranged at a distance from the first battery carrier (14) or directly coupled to the first battery carrier (14); and/or
a fourth battery carrier (14) which is fastened to the second longitudinal outer side of the vehicle main frame (16) and projects downwards in a vertical direction beyond the second longitudinal outer side of the vehicle main frame (16), the fourth battery carrier (14) being arranged at a distance from the second battery carrier (14) and/or directly coupled to the second battery carrier (14).

13. The device (10) according to one of the previous claims, wherein:
the vehicle main frame (16) is formed as a ladder frame, preferably with two main longitudinal beams (18) spaced apart in parallel and a plurality of cross beams (20) connecting the main longitudinal beams (18) to each other; and/or
the at least one battery carrier (14) is configured as a battery box or a battery cage for accommodating a battery (12); and/or
the at least one battery carrier (14) projects downwards beyond the longitudinal outer side of the vehicle main frame (16) by at least 1/3, preferably by at least 1/2, of a height of the at least one battery carrier (14) in a vertical direction; and/or
the at least one battery carrier (14) lies flat against the longitudinal outer side of the vehicle main frame (16).

14. A motor vehicle, preferably utility vehicle, with a device according to one of the preceding claims.

## Revendications

1. Dispositif (10) pour supporter au moins une batterie (12), de préférence une batterie de traction, pour un véhicule automobile, de préférence un véhicule utilitaire, présentant :
un châssis principal de véhicule (16) ; et
au moins un support de batterie (14) qui est fixé à un côté extérieur longitudinal du châssis principal de véhicule (16) et qui fait saillie vers le bas dans une direction verticale au-delà du côté extérieur longitudinal du châssis principal de véhicule (16), **caractérisé par**
au moins une batterie (12), de préférence une batterie de traction, qui est agencée dans l'au moins un support de batterie (14) exclusivement dans la zone faisant saillie vers le bas dans la direction verticale au-delà du côté extérieur longitudinal du châssis principal de véhicule (16).

2. Dispositif (10) selon la revendication 1, dans lequel :
l'au moins un support de batterie (14) est fixé de manière rigide au côté extérieur longitudinal du châssis principal de véhicule (16) et fait saillie vers le bas dans la direction verticale au-delà du châssis principal de véhicule (16) de telle sorte que le support de batterie (14) peut être tourné vers le bas au moins partiellement sous le châssis principal de véhicule (16) lors d'un impact latéral sur le support de batterie (14).

3. Dispositif (10) selon la revendication 2, dans lequel :
la fixation rigide sur le côté extérieur longitudinal agit comme un axe de rotation lors de l'impact latéral, l'axe de rotation s'étendant de préférence le long du côté extérieur longitudinal ; et/ou
la fixation rigide sur le côté extérieur longitudinal agit comme un montage articulé de l'au moins un support de batterie (14) lors de l'impact latéral.

4. Dispositif (10) selon l'une quelconque des revendications précédentes, présentant en outre :
une structure d'appui (22) qui est agencée sous le châssis principal de véhicule (16) et à laquelle l'au moins un support de batterie (14) est fixé sous le côté extérieur longitudinal du châssis principal de véhicule (16) .

5. Dispositif (10) selon la revendication 4, dans lequel :
la structure d'appui (22) est configurée pour permettre un pivotement de l'au moins un support de batterie (14) vers le bas au moins partiellement sous le châssis principal de véhicule (16) lors d'un impact latéral, de telle sorte qu'elle est déformable de manière prédéterminée en comparaison du châssis principal de véhicule (16), de préférence pliable vers l'intérieur ; et/ou
la structure d'appui (22) est configurée pour permettre un pivotement de l'au moins un support de batterie (14) vers le bas au moins partiellement sous le châssis principal de véhicule (16) lors d'un impact latéral, de telle sorte qu'elle est déplaçable de manière prédéterminée.

6. Dispositif (10) selon la revendication 4 ou la revendication 5, dans lequel :
la structure d'appui (22) est déformable de manière prédéterminée et/ou déplaçable de manière prédéterminée par un façonnage et/ou par l'utilisation de différents matériaux et/ou par l'utilisation de différentes épaisseurs de matériaux ; et/ou
la structure d'appui (22) est fixée par le bas au châssis principal de véhicule (16), de préférence de manière rigide, de préférence à des traverses du châssis principal de véhicule (16).

7. Dispositif (10) selon l'une quelconque des revendications 4 à 6, dans lequel :
la structure d'appui (22) elle-même est configurée pour supporter au moins une batterie (12), de préférence au centre, sous le châssis principal de véhicule (16), de préférence :
la structure d'appui (22) est configurée pour le montage élastique de l'au moins une batterie (12) auto-portée.

8. Dispositif (10) selon l'une quelconque des revendications 4 à 7, dans lequel :
la structure d'appui (22) présente au moins une traverse (24) ayant un profil ouvert vers le bas, de préférence un profil en U ; et/ou
la structure d'appui (22) présente deux longerons auxiliaires (26) espacés parallèlement.

9. Dispositif (10) selon la revendication 8, dans lequel :
l'au moins une traverse (24) de la structure d'appui (22) est fixée par le bas, de préférence de manière rigide, à au moins une traverse (20) du châssis principal de véhicule (16); et/ou
l'au moins une traverse (24) de la structure d'appui (22) relie entre eux et/ou supporte les deux longerons auxiliaires (26) espacés parallèlement ; et/ou
l'au moins une traverse (24) de la structure d'appui (22) est déformable de manière prédéterminée, de préférence pliable vers l'intérieur, au moins partiellement sous le châssis principal de véhicule (16) lors de la rotation de l'au moins un support de batterie (14) vers le bas ; et/ou
les deux longerons auxiliaires (26) espacés parallèlement montent élastiquement au moins une batterie (12) ; et/ou
les deux longerons auxiliaires (26) espacés parallèlement sont déplaçables au moins partiellement sous le châssis principal de véhicule (16) dans une direction de l'impact latéral par une déformation prédéterminée de l'au moins une traverse (24) de la structure d'appui (22) lors de la rotation de l'au moins un support de batterie (14) vers le bas.

10. Dispositif (10) selon la revendication 5 ou l'une quelconque des revendications 6 à 9, lorsqu'elles dépendent de la revendication 5, dans lequel :
l'au moins un support de batterie (14) est déformable de manière prédéterminée par rapport à une direction transversale au côté extérieur longitudinal du châssis principal de véhicule (16), de préférence par un façonnage et/ou par l'utilisation de différents matériaux et/ou par l'utilisation de différentes épaisseurs de matériau, de telle sorte que l'au moins un support de batterie (14) se déforme de manière prédéterminée avant et/ou pendant le pivotement avec dissipation de l'énergie d'impact lors d'un impact latéral.

11. Dispositif (10) selon l'une quelconque des revendications précédentes, dans lequel l'au moins un support de batterie (14) présente :
un premier support de batterie (14) fixé à un premier côté extérieur longitudinal du châssis principal de véhicule (16) et faisant saillie vers le bas dans une direction verticale au-delà du premier côté extérieur longitudinal du châssis principal de véhicule (16) ; et
un deuxième support de batterie (14) fixé à un deuxième côté extérieur longitudinal du châssis principal de véhicule (16), opposé au premier côté extérieur longitudinal, et faisant saillie vers le bas dans une direction verticale au-delà du deuxième côté extérieur longitudinal du châssis principal de véhicule (16).

12. Dispositif (10) selon la revendication 11, dans lequel l'au moins un support de batterie (14) présente en outre :
un troisième support de batterie (14) fixé au premier côté extérieur longitudinal du châssis principal de véhicule (16) et faisant saillie vers le bas dans une direction verticale au-delà du premier côté extérieur longitudinal du châssis principal de véhicule (16), le troisième support de batterie (14) étant espacé du premier support de batterie (14) ou directement couplé au premier support de batterie (14) ; et/ou
un quatrième support de batterie (14) fixé au deuxième côté extérieur longitudinal du châssis principal de véhicule (16) et faisant saillie vers le bas dans une direction verticale au-delà du deuxième côté extérieur longitudinal du châssis principal de véhicule (16), le quatrième support de batterie (14) étant espacé du deuxième support de batterie (14) et/ou directement couplé au deuxième support de batterie (14).

13. Dispositif (10) selon l'une quelconque des revendications précédentes, dans lequel :
le châssis principal de véhicule (16) est formé comme un châssis en échelle, de préférence avec deux longerons principaux (18) espacés parallèlement et une pluralité de traverses (20) qui relient les longerons principaux (18) entre eux ; et/ou
l'au moins un support de batterie (14) est configuré comme un boîtier de batterie ou une cage de batterie pour recevoir une batterie (12) ; et/ou
l'au moins un support de batterie (14) fait saillie d'au moins 1/3, de préférence d'au moins 1/2, d'une hauteur de l'au moins un support de batterie (14) dans une direction verticale vers le bas au-delà du côté extérieur longitudinal du châssis principal de véhicule (16) ; et/ou
l'au moins un support de batterie (14) repose à plat sur le côté extérieur longitudinal du châssis principal de véhicule (16).

14. Véhicule automobile, de préférence véhicule utilitaire, avec un dispositif selon l'une quelconque des revendications précédentes.
